(19) Europäisches Patentamt

European Patent Office

Office européen des brevets

(11) Veröffentlichungsnummer: **0 331 136**

**A1**

(12) **EUROPÄISCHE PATENTANMELDUNG**

(21) Anmeldenummer: 89103556.0

(22) Anmeldetag: 01.03.89

(51) Int. Cl.4: **C02F 9/00 , E04G 23/00 , B01D 21/00 , C02F 1/66**

(30) Priorität: 03.03.88 DE 3806985
24.02.89 DE 3905864

(43) Veröffentlichungstag der Anmeldung:
06.09.89 Patentblatt 89/36

(84) Benannte Vertragsstaaten:
ES GR

(71) Anmelder: **Bräuer, Dieter**
**Fichtenstrasse 21**
**D-6455 Erlensee 2(DE)**

(72) Erfinder: **Bräuer, Dieter**
**Fichtenstrasse 21**
**D-6455 Erlensee 2(DE)**

(74) Vertreter: **Meier, Robert, Dipl.-Ing.**
**Patentanwalt Dipl.-Ing. Robert Meier Auf dem**
**Mühlberg 16**
**D-6000 Frankfurt am Main 70(DE)**

(54) **Vorrichtungen zur Entsorgung von Schmutzwasser.**

(57) Um das bei einer Fassadenreinigung anfallende Schmutzwasser zu entsorgen, wird dieses in einer Wanne aufgefangen, daraufhin in einem ersten Behälter (14) von mechanischen Schmutzpartikeln befreit, anschließend in einem zweiten Behälter (33) durch gesteuerte Zusätze einer Base (52) oder einer Säure neutralisiert und danach in einem dritten Behälter (58) gesammelt und aus diesem in die Kanalisation abgelassen oder für eine Wiederverwendung entnommen. Zum Auffangen des Schmutzwassers wird eine zusammenlegbare Folienwanne verwendet, aus der das Schmutzwasser über eine Förderpumpe und eine fliegende Leitung (12) in den ersten Behälter gepumpt wird. Aus dem ersten Behälter (14) und dem zweiten Behälter (33) gelangt das Wasser durch Überlauf in den jeweils folgenden Behälter. Alle drei Behälter sind zusammen mit je einem Vorratsbehälter für eine Säure bzw. eine Base (52) sowie mit wenigstens einem pH-Meßgerät, Dosierpumpe und elektronischen Steuer- und Anzeigemitteln (76) zu einer Transporteinheit kombiniert. In einem zweiten Ausführungsbeispiel schließt die Transporteinrichtung auch Sammelbehälter und Förderpumpen für Spalt- bzw. Entflockungsmittel bzw. einen Ölabscheider bzw. einen Aktivkohlefilter ein.

FIG. 8

## Vorrichtungen zur Entsorgung von Schmutzwasser

Die Erfindung bezieht sich auf Vorrichtungen zur Entsorgung des bei Fassadenreinigungen anfallenden Schmutzwassers mit einem ersten Behälter zum mechanischen Abscheiden von Schmutzpartikeln, einem zweiten Behälter zum Neutralisieren des Wassers und einem dritten Behälter zum Sammeln des gereinigten Wassers, der mit einer Wasserentnahme oder einem Wasserauslauf verbunden ist.

Zur Erhaltung und zur Pflege von Fassaden müssen diese von Zeit gereinigt werden. Unabhängig von der Beschaffenheit der Fassaden, Kacheln, Farbanstrich- Stein bzw. Sandsteinfassaden nehmen die jeweiligen Oberflächen mehr oder weniger außer dem normalen Schmutz auch alle Atmosphärilien auf. Hierzu gehören beispielsweise Schwermetalle und all diejenigen Stoffe bzw. Chemikalien, die infolge Umweltverschmutzung in der Atmosphäre vorhanden sind.

Abhängig von der Beschaffenheit der Fassaden sind auch die notwendigen Reinigungsmittel. Eine mechanische Säuberung führt nicht zum Ziel. Um die Atmosphärilien und den Schmutz abzulösen, sind wenigstens Säuren bzw. Basen in unterschiedlichen Konzentrationen notwendig.

Die Fassaden werden von Reinigungskolonnen Partie für Partie abgewaschen. Diese Reinigungsarbeit kann unter Umständen mehrere Wochen in Anspruch nehmen.

Bisher lief das Schmutzwasser einfach in das Erdreich oder in die Kanalisation ab. Dieses ist zwar sehr schädlich, wurde aber in Städten und Orten, die über Abwasserreinigungsanlagen verfügen, mehr oder weniger geduldet.

In anderen Orten hingegen ist seit einiger Zeit das Reinigen von Fassaden untersagt, um eine Überlastung der Abwässer durch die bei der Fassadenreinigung anfallenden Schadstoffe zu vermeiden.

Hier setzt die Erfindung ein. Ihr liegt die Aufgabe zugrunde, leicht an wechselnden Orten einsetzbare Vorrichtungen zu schaffen, vermittels der eine Entsorgung des bei einer Fassadenreinigung anfallenden Schmutzwassers auch an unter Umständen schwer zugänglichen Einsatzorten möglich ist.

Er wurde gefunden, daß sich diese Aufgabe durch ein erstes Ausführungsbeispiel der Erfindung in einfacher Weise dadurch lösen läßt, daß diese drei Behälter feste Behälter sind, die zusammen mit je einem Vorratsbehälter für eine Säure bzw. Base sowie mit wenigstens einem pH-Meßgerät, Dosierpumpen und elektronischen Steuer- und Anzeigemitteln zu einer Transporteinheit kombiniert sind, und daß der erste Behälter über eine fliegende Leitung mit einer an deren Saugende angeschlossenen Förderpumpe mit einer zusammenlegbaren Folienwanne zum Auffangen des von der Fassade ablaufenden Schumtzwassers verbindbar ist, deren obere Kante der zu einer Fassade hinweisenden Seitenwand unter Zwischenfügung eines Dichtstreifens an der Fassade festlegbar ist.

Diese Transporteinrichtung kann entweder in einem Container angeordnet, auf einem Pritschenwagen montiert oder beispielsweise auf einem einachsigen bzw. zweiachsigen Anhänger o.dgl. augebaut werden. Die in einem Container montierte Vorrichtung wird mit Vorteil mit der Reinigung großer Fassaden eingesetzt werden. Der Container kann in der Nähe der zu reinigenden Fassade abgestellt und das Transportmittel für den Container danach anderweitig benutzt werden.

Die Montage auf Pritschenwagen bzw. Anhängern wird bevorzugt in Verbindung mit der Entsorgung von Abwässern von kleineren Fassaden eingesetzt. Für die Dauer des Einsatzes kann die Transporteinheit vom Pritschenwagen heruntergenommen und auf Stützen am Einsatzort aufgebaut werden. Ein Anhänger kann durch an sich bekannte Stützen aufgebockt werden, um die Lager und die Federung der Achse zu entlasten.

Die Folienwanne läßt sich relativ einfach zusammenlegen und aufbauen. Von Vorteil ist, wenn die obere Kante der zu einer Fassade hinweisenden Sei tenwand der Folienwanne unter Zwischenfügung eines Dichtstreifens an der Fassade befestigt wird. Wenn der Dichtstreifen nach Anspruch 3 ausgebildet ist, ist die größt möglichste Gewähr dafür gegeben, daß das zu entsorgende Schmutzwasser nicht in den Boden abfließen kann. Die erfindungsgemäß benötigen Behälter können Kunststoffbehälter sein. Von großem Vorteil ist, wenn Kunststoffbehälter nach Art von Heizöltanks mit je einem Mannlochdeckel verwendet werden. Derartige Kunststoffbehälter haben ein hinreichendes Fassungsvermögen, sind stabil und wegen der großen Stückzahlen relativ preiswert. Derartige Tanks haben die Zulassung für Schlämme und Chemie.

Die Behälter werden gemäß Anspruch 4 in einem Gerüst angeordnet. Es hat sich bewährt, daß die Behälter untereinander durch lösbare Überlaufrohrstücke miteinander verbunden sind. Auf diese Weise erreicht man, daß sich im ersten Behälter zum mechanischen Abscheiden von Schwebestoffen im unteren Teil des Behälters ein Sumpf bilden und nach dem Einsatz beseitigt werden kann. Dadurch, daß der zweite Behälter zum Neutralisieren des Schmutzwassers ebenfalls durch einen Überlauf mit dem dritten Behälter verbunden ist, erreicht man nicht nur eine einfache Handhabung der Behälter, sondern auch ein leichtes Entfernen des im zweiten Behälters verbleibenden Schmutzwassers. Nach dem Einsatz wird von einer dafür konzessionierten Firma der Sumpf aus dem Erstbehälter, das Schmutzwasser aus dem zweiten Behälter und der verbliebene Wasserrest aus dem dritten Behälter entsorgt. Für dieses Entsorgen und für das Transportieren dieser Schmutzwässer sind besondere Genehmigungen erforderlich. Die erfindungsgemäße Vorrichtung bleibt solange am Einsatzort, bis durch die konzessionierte Firma die Entsorgung abgeschlossen ist. Dieses hat den weiteren Vorteil, daß die erfindungsgemäße Vorrichtung immer im leeren Zustand transportiert wird. Hierdurch ist es möglich, preiswerte Pritschenwagen und einachsige Anhänger bzw. auch Container zu verwenden.

Im ersten Behälter werden die Feststoffpartikel bzw. Schwebestoffe durch Schwebestoff-Fänger aus dem Wasserstrom abgeschieden. Diese Schwebestoff-Fänger können an sich beliebig konstruiert sein. Von Vorteil ist, wenn als Schwebestoff-Fänger in Rahmen befestigte Kunststoffblenden verwendet werden. Diese sind nach den Ansprüchen 8 bis 10 ausgebildet, wobei darauf geachtet ist, daß sie zur Reinigung durch die Mannlochdeckel aus den Be hältern entfernt und wieder in die Behälter eingegeben werden können. Innerhalb der Behälter werden sie durch Schienen oder Saugnäpfe an den Innenwänden der Behälter befestigt.

Der zweite Behälter ist gemäß der Ansprüche 11 und 12 ausgebildet. Durch ein Rührgerät wird das Schmutzwasser, das von mechanischen Schmutzpartikeln weitgehend befreit ist, ständig in Bewegung gehalten. Durch ein pH-Meßgerät wird der Zusatz von Basen bzw. Säuren gesteuert.

Die Ausbildung des dritten Behälters schließlich ist in den Ansprüchen 13 und 14 gekennzeichnet.

In einem zweiten Ausführungsbeispiel ist gemäß Anspruch 18 der erste Behälter zum mechanischen Abscheiden der Schmutzpartikel hinter dem Anschluß der fliegenden Leitung mit einem Bogensieb ausgerüstet und zwischen dem zweiten Behälter zum Neutralisieren des Wassers und dem dritten Behälter zum Sammeln des gereinigten Wassers ist ein Schrägklärer geschaltet.

Das Bogensieb dient als Grobfilter. Konstruktiv sind der erste Behälter und das Bogensieb gemäß Anspruch 19 ausgebildet. Zum Auffangen der abgefilterten Feststoffe ist ein Feststoff-Fänger vorgesehen.

Die Maßnahmen zur Eliminierung von Schwermetallen sind im Anspruch 20 gekennzeichnet. Die Schwermetalle werden chemisch mit Hilfe von Spalt- und Flokkungsmitteln in an sich bekannter Weise abgeschieden. Diese abgeschiedenen Schwermetalle setzen sich - evtl. zusammen mit Schwebestoffen - im Schrägklärer ab.

Einzelheiten der Vorrichtung sind in den Unteransprüchen 21 bis 30 gekennzeichnet. Durch eine optische Kontrolleinrichtung gemäß der Ansprüche 21 und 22 sowie durch eine pH-Wert-Endkontrolle wird die Überwachung des Reinigungsvorganges intensiviert und aufgeschrieben.

Von Vorteil sind die in den Unteransprüchen 25 bis 28 gekennzeichneten Maßnahmen. Zur Unterbringung des Ölabscheiders und des Aktivkohlefilters fin den sich innerhalb des Transporteinheit genügend Plätze, wenn diese Geräte ständig in die Vorrichtung integriert sein müssen.

In anderen Ausführungsbeispielen der Erfindung sind ein Ölabscheider und ein Aktivkohlefilter nicht ständig erforderlich. Sie sind dann zu einer separaten Einheit zusammengefaßt, die - im Bedarfsfall - eingesetzt werden kann und zu diesem Zweck auch außerhalb der Transporteinheit, beispielsweise auf der Deichsel eines Wagens, installiert werden kann.

Gemäß Anspruch 29 wird erreicht, daß das gereinigte Wasser, eventuell nach Ergänzung durch Wasser aus einem Frischwasserzulauf, unmittelbar wieder verwendet werden kann. Aus diesem Grund kann am dritten Behälter ein Anschluß, vorzugsweise ein Anschluß für ein Hochdruckreinigungsgerät, vorgesehen sein.

Mit den Maßnahmen nach der vorliegenden Erfindung ist es möglich, die Vorrichtung so ku konzipieren, daß sie zur Reinigung jeder Fassade - unabhängig von der Art und dem Grad der Verschmutzung - gefahrlos eingesetzt werden kann.

Ausführungsbeispiele der Erfindung werden nachfolgend anhand der Zeichnung erläutert.

Es zeigt:

Fig. 1 eine schematische Übersicht zur Erläuterung des Verfahrens und der erfindungsgemäßen Vorrichtung,

Fig. 2 eine schematische Darstellung einer Folienwanne,

Fig. 3 einen Querschnitt durch ein Ausführungsbeispiel des ersten Behälters in verbindung mit einer Ansicht des zweiten Behälters,

Fig. 4 einen Querschnitt durch den ersten Behälter mit einer Ansicht auf die einzelnen Schwebestoff-Fänger,

Fig. 5a und b Befestigungsmittel für die Schwebestoff-Fänger,

Fig. 6 einen Längsschnitt durch den zweiten Behälter,

Fig. 7 einen Längsschnitt durch den dritten Behälter,

Fig. 8 eine schematische Darstellung einer auf einem einachsigen Anhänger montierten Transporteinheit,

Fig. 9 eine Rückansicht des Anhängers nach Fig. 8,

Fig. 10 eine Draufsicht auf den Anhänger gemäß Fig. 8,

Fig. 11 schematisch ein Schaltbild eines zweiten Ausführungsbeispieles der Vorrichtung und

Fig. 12 eine perspektivische Ansicht einer Transporteinrichtung nach Fig. 11.

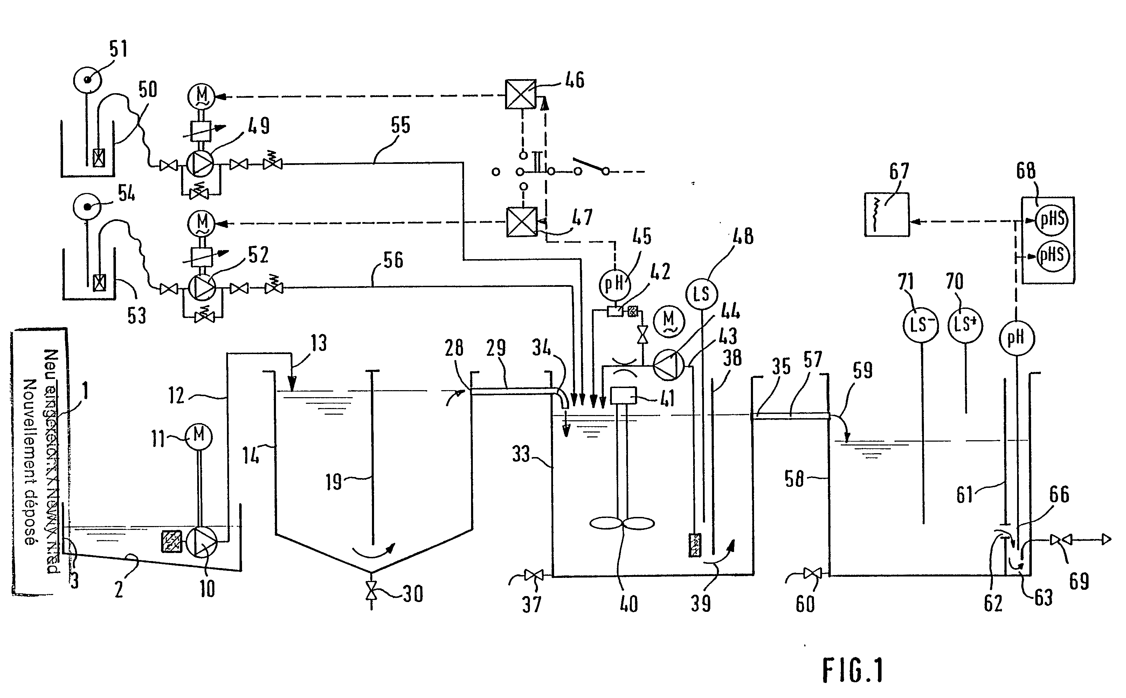

In der schematischen Übersicht zur Erläuterung des erfindungsgemäßen Verfahrens gemäß Fig. 1 ist am unteren Bereich einer Fassade 1 eine zusammenlegbare Folienwanne 2 angeordnet, deren zur Fassade 1 hinweisende Seitenwand 3 auf eine später erläuterte Weise an der Fassade befestigt ist.

In der zusammenlegbaren Folienwanne 2 wird das Schmutzwasser aufgefangen und mittels einer Förderpumpe 10, die von einem Motor 11 angetrieben wird, über eine fliegende Leitung 12 und ein Zulaufrohr 13 in einen ersten Behälter 14 gepumpt. Die fliegende Leitung 12 ist so lang, daß sie jede notwendige Entfernung zwischen der zusammenlegbaren Folienwanne 2 und dem ersten Behälter 14 überbrücken kann.

Im ersten Behälter 14 ist schematisch ein Schwebestoff-Fänger 19 angedeutet, der in der praktischen Ausbildung jede beliebige zweckmäßige Form erhalten kann.

Das weitgehend von Schwebestoffen gereinigte Schmutzwasser fließt aus dem ersten Behälter 14 über einen Überlaufstutzen 28 und ein Überlaufrohr 29 ab und gelangt über einen Einlaufstutzen 34 in einen zweiten Behälter 33. Der erste Behälter ist mit einem Wasserblaß 30 versehen.

Der zweite Behälter 33 ist über einen Überlaufstutzen 35 und ein Überlaufrohr 57 an einen dritten Behälter 58 angeschlossen, der später erläutert wird.

Auch der zweite Behälter 33 weist einen Wasserblaß 37 auf. In Bezug auf die Wasserdurchflußrichtung ist im zweiten Behälter, und zwar im rückwärtigen Bereich eine senkrechte Trennwand 38 mit einem unteren Wasserdurchlauf 39 vorgesehen. Im Raum vor der senkrechten Trennwand 38 ist im zwei ten Behälter 33 ein Rührwerk 40 vorgesehen, welches von einem Rührmotor 41 angetrieben wird. Das Rührwerk hält das im zweiten Behälter 33 befindliche Schmutzwasser in ständiger Bewegung. Anstelle des Rührwerkes 40, 41 kann zur Bewegung des Wassers auch eine Umwälzpumpe 44 in einer Bypaßleitung 43 vorgesehen sein. An der Mündung der Bypaßleitung 43 ist ein nicht bezeichneter Filter vorgesehen.

Im in Fig. 1 dargestellten Ausführungsbeispiel zweigt von der Bypaßleitung 43 eine weitere Bypaßleitung ab, in der ein pH-Wert-Fühler 42 angeordnet ist. wenn das Rührwerk 40 zum Einsatz kommt, kann ein entsprechend ausgebildeter pH-Wert-Fühler 42 auch hinter dem Wasserdurchlauf 39 angeordnet sein.

Der pH-Wert-Fühler 42 steht mit einem pH-Wert-Meßgerät 45 in Verbindung. welches auf an sich bekannte Weise über Dosierpumpenfestwertregler Säure 46 und Dosierpumpenfestwertregler Base 47 die Neutralisation des Schmutzwassers im zweiten Behälter 33 steuert. Zu diesem Zweck ist der Dosierpumpenfestwertregler Säure 46 auf an sich bekannte Weise an eine Dosierpumpe Säure 49 angeschlossen, mit deren Hilfe Säure aus einem Vorratsbehälter 50 über eine Zulaufleitung Säure 55 dem zweiten Behälter 33 zugesetzt werden kann. Entsprechend wird über den Dosierpumpenfestwertregler Base 47 eine Dosierpumpe Base 52 gesteuert, mit deren Hilfe Base aus einem Vorratsbehälter Base 53 und über eine Zulaufleitung Base 56 dem zweiten Behälter zugesetzt wird.

Der zweite Behälter 33 ist mit einem Pegelmesser 48, der Vorratsbehälter Säure 50 mit einem Pegelmesser Säure 51 und der Vorratsbehälter Base 53 mit einem Pegelmesser Base 54 ausgerüstet. Diese Pegelmesser sind auf an sich bekannte, hier nicht im einzelnen erläuterte weise mit der elektronischen Steuerung verbunden, durch die ein ordnungsgemäßer Ablauf der Neutralisierung des Schmutzwassers sichergestellt ist.

Das neutralisierte Wasser gelangt über das Überlaufrohr 57 und einen Einlaufstutzen 59 in den dritten Behälter 58. Dieser dritte Behälter hat ebenfalls einen Wasserablaß 60 und weist im letzten Teil eine senkrechte Trennwand 61 mit einem unteren Wasserdurchlauf 62 auf. Hinter diesem Wasserdurchlauf 62 liegt ein Naßhalteraum 63, an den ein Wasserauslauf 69 angeschlossen ist. Über diesen Wasserauslauf 69 kann das gereinigte Wasser entweder in die Kanalisation abfließen, oder einer weiteren Verwendung zugänglich gemacht werden.

Der dritte Behälter 58 ist mit Pegelmessern bzw. einem Wasserstandsmelder max. 70 und einem Wasserstandsmelder min. 71 ausgerüstet, die mit der elektronischen Steueranlage verbunden sind.

Im Naßhalteraum 63 ist ein pH-Wert-Fühler 66 angeordnet, der mit einem pH-Wert-Schreiber 67 in Schaltverbindung steht. Durch den pH-Wert-Schreiber wird ein Protokoll der Abwasserentsorgung aufgenommen. Der pH-Wert-Schreiber 67 ist mit einem pH-Wert-Grenzwertgeber max., min. 68 verbunden, der die gesamte Anlage abstellen kann, wenn im Naßhalteraum 63 der zulässige pH-Wert über- oder unterschritten wird.

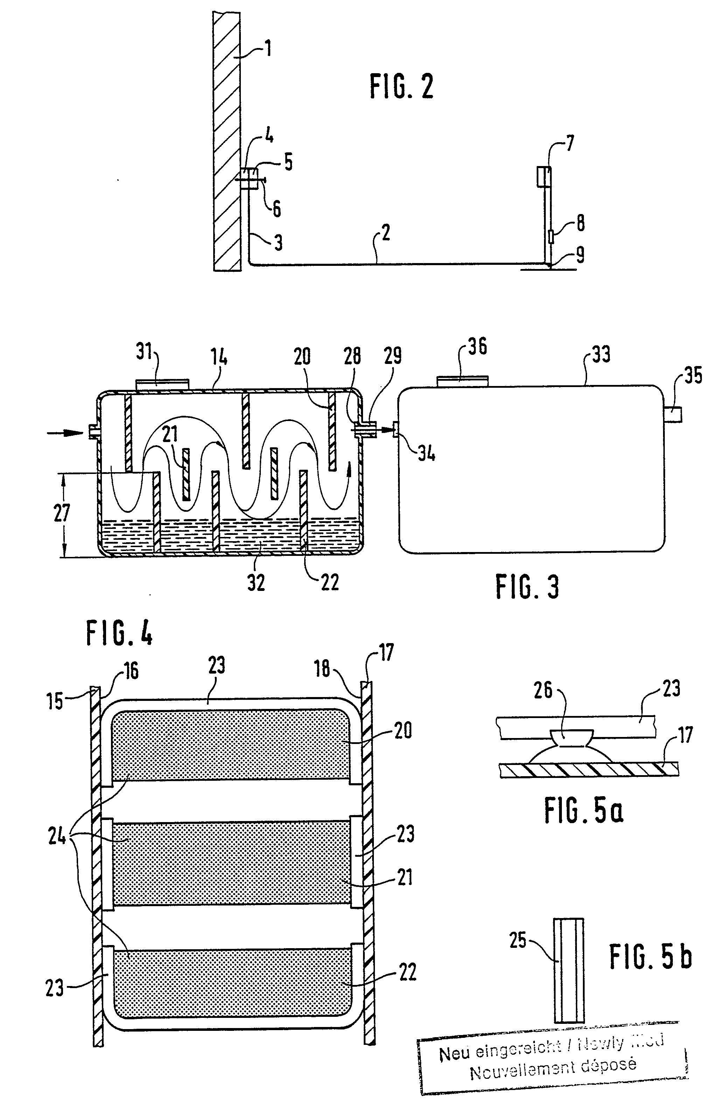

Fig. 2 zeigt schematisch die konsturktive Ausbildung der zusammenlegbaren Folienwanne 2. Die zur Fassade 1 hinweisende Seitenwand 3 der zusammenlegabren Folienwanne 2 ist unter Zwischenfügung eines Dichtungsstreifens 4 mittels eines Befestigungsstreifens 5 und Splinten 6 an der Fassade 1 befestigt. Von Vorteil ist, wenn der Dichtstreifen 4 aus unter Einwirkung von Feuchtigkeit aufquellendem Material besteht. Auf diese Art und Weise wird entlang der gesamten Seitenwand 3 für eine sichere Abdichtung gegenüber der Fassade 1 gesorgt.

Mittels einer Befestigungsklammer 7 ist die der Seitenwand 3 gegenüberliegende Wand an einem Stellwinkel 8 befestigt, der mit einem an sich bekannten Folienspanner 9 kombiniert ist. Mit Hilfe der zuvor beschriebenen Maßnahmen kann die zusammenlegbare Folienwanne rasch aufgebaut und ebenso rasch wieder abgebaut und verstaut werden.

Fig. 3 zeigt schematisch im Schnitt den ersten Behälter 14 mit oberen Schwebestoff-Fängern 20, mittleren Schwebestoff-Fängern 21 und unteren Schwebe stoff-Fängern 22. Die oberen Schwebestoff-Fänger 20 ragen von oben bis zur halben Behälterhöhe 27 in den ersten Behälter hinein. Die unteren Schwebestoff-Fänger 22 ragen von unten ebenfalls bis zur halben Behälterhöhe 27 in den ersten Behälter hinein. Zwischen den oberen Schwebestoff-Fängern 20 und den unteren Schwebestoff-Fängern 22 sind mittlere Schwebestoff-Fänger 21 im schematisch angedeuteten Wasserstrom angeordnet. Die durch die Schwebestoff-Fänger abgeschiedenen Schwebestoffe sammeln sich im unteren Teil des ersten Behälters 14 als Sumpf 32.

Fig. 4 läßt Einzelheiten der Schwebestoff-Fänger 20, 21 und 22 erkennen. Sie bestehen aus Rahmen 23, die Kunststoffblenden 24 halten. Im dargestellten Ausführungsbeispiel sind die Schwebestoff-Fänger 20, 21 und 22, vorzugsweise ihre Rahmen 23, mittels Führungsschienen 25 gemäß Fig. 5a befestigt, die an den Innenseiten 16 bzw. 18 der Seitenwände 15 bzw. 17 befestigt sind.

Ohne am Kern der Erfindung etwas zu ändern,können zur Befestigung der Rahmen 23 an einer Seitenwand 17 auch Saugnäpfe 26 verwendet werden, von denen einer in Fig. 5b schematisch angedeutet ist.

Insbesondere Fig. 4 läßt erkennen, daß die Schwebestoff-Fänger 20, 21 und 22 so ausgebildet sind, daß sie zur Demontage und Montage leicht durch einen Mannlochdeckel 31 am ersten Behälter 14 hindurchpassen.

Der zweite Behälter 33 ist mit dem ersten Behälter 14, wie in Verbindung mit Fig. 1 erläutert, über das Überlaufrohr 29 verbunden. Auch der zweite Behälter 33 ist mit einem Mannlochdeckel 36 versehen.

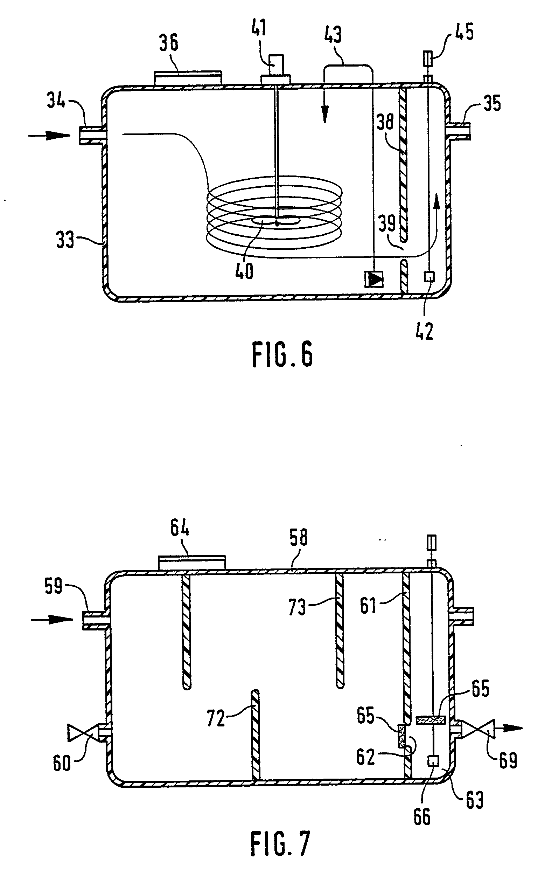

Fig. 6 zeigt ein Ausführungsbeispiel des zweiten Behälters 33 im Schnitt. Schematisch ist das Rührwerk 40 mit dem Rührmotor 41 angedeutet. Bezüglich des Wasserstromes im hinteren Bereich des zweiten Behälters 33 ist die senkrechte Trennwand 38 mit dem unteren Wasserdurchlauf 39 erkennbar. Schematisch ist auch die Bypaßleitung 43 mit einer nicht bezeichneten Umwälzpumpe dargestellt.

Hinter dem unteren Wasserdurchlauf 39 ist im in Fig. 6 dargestellten Ausführungsbeispiel der pH-Wert-Fühler 42 angeordnet, der mit dem pH-Wert-Meßgerät 45 in Schaltverbindung steht.

Fig. 7 zeigt im Querschnitt den dritten Behälter 58, der im dargestellten Ausführungsbeispiel mit oberen Feststoff-Fängern 73 und unteren Feststoff-Fängern 72 ausgerüstet ist. Auch der dritte Behälter 58 weist einen Mannlochdeckel 54 auf. Im in Fig. 7 dargestellten Ausführungsbeispiel ist der untere Wasserdurchlauf 62 mit Filtern 65 kombiniert, die sowohl vor dem Wasserdurchlauf 62 wie auch oberhalb des Wasserauslaufes 69 vorgesehen sein können.

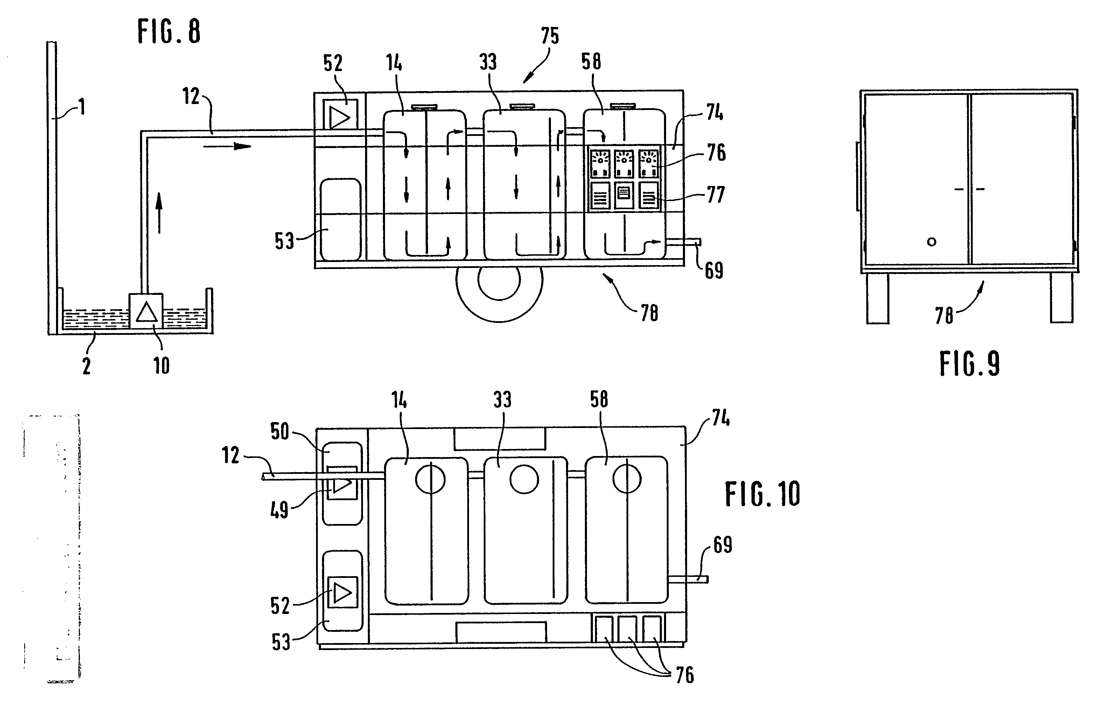

In den Fig. 8, 9 und 10 ist schematisch ein Gerüst 74 dargestellt, in welchem alle Einzelteile der erfindungsgemäßen Vorrichtung angeordnet sind. Das Gerüst 74 bildet eine Transporteinheit 75, welche im dargestellten Ausführungsbeispiel auf einem einachsigen Anhänger 78 montiert ist. Ohne am Kern der Erfindung etwas zu ändern, kann die Transporteinheit 75 auch innerhalb eines Containers oder auf einem Pritschenwagen montiert sein.

In der Seitenansicht gemäß Fig. 8 ist durch Pfeile der Wasserdurchlauf angedeutet. Das Schmutzwasser wird mittels einer Förderpumpe 10 aus der zusammenlegbaren Folienwanne 2 herausgesaugt und in den Behälter 14 gepumpt. Von hier aus gelangt das Wasser in den zweiten Behälter 33 zur Neutralisierung des Wassers. Schließlich wird das so gereinigte Wasser im dritten Behälter 58 aufgefangen, an den der Wasserauslauf 69 angeschlossen ist.

Fig. 10 zeigt diese Anordnung von oben, wobei noch die Vorratsbehälter 53 Base und 50 Säure sowie die Dosierpumpe Base 52 und die Dosierpumpe Säure 49 erkennbar sind.

In den Fig. 8 und 10 sind weiterhin schematisch die elektrischen Schalt-bzw. Steuerorgane 76 sowie die elektrischen bzw. elektronischen Anzeigen 77 angedeutet.

Fig. 9 zeigt schematisch den einachsigen Anhänger 78 von hinten.

Aus dem Vorstehenden ist erkennbar, daß die aus dem ersten Behälter 14 und dem zweiten Behälter 33 abfließenden, jeweils gereinigten Flüssigkeiten durch Überlauf in den nächsten Behälter gelangen. Nach Abschluß des Einsatzes sind der erste Behälter 14 und der zweite Behälter 33 mit den nicht abgeflossenen Flüssigkeiten ganz und der dritte Behälter 58 teilweise gefüllt. Diese Reste sowie der Sumpf 32 werden von dafür konzessionierten Firmen entfernt, meist abgesaugt, und abtransportiert. Aus diesem Grunde braucht die Firma, die die erfindungsgemäße Vorrichtung betreibt, für das Abfahren der Schadstoffe nicht zu sorgen. Die erfindungsgemäße Vorrichtung kann aus diesem Grunde immer leer transportiert werden, was sich vorteilhaft auf die Konstruktion der Transporteinheit 75 und der Transportmittel auswirkt.

In der folgenden Beschreibung des zweiten Ausführungsbeispieles werden, so weit möglich, die beim ersten Ausführungsbeispiel verwendeten Bezeichnungen und Bezugsziffern verwendet.

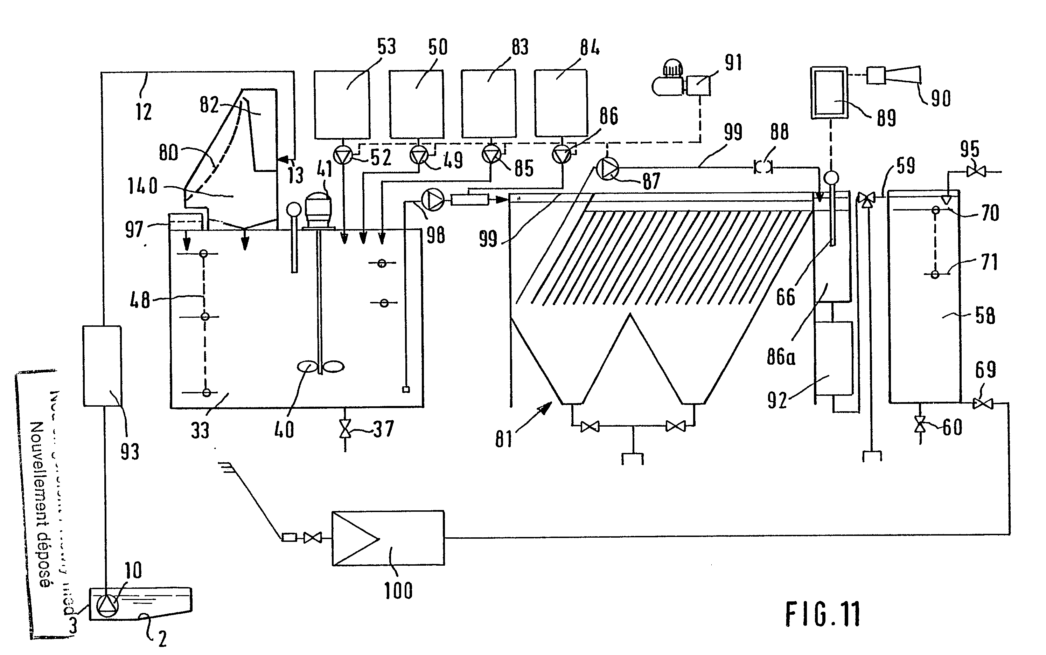

Fig. 11 zeigt schematisch die zusammenlegbare Folienwanne 2 mit der nur angedeuteten Seitenwand 3, die an der zu reinigenden Fassade festlegbar ist.

In die zusammenlegbare Folienwanne 2 reicht die Förderpumpe 10 hinein, welche über die fliegende Leitung 12 an das Zulaufrohr 13 für den ersten Behälter 140 angeschlossen ist.

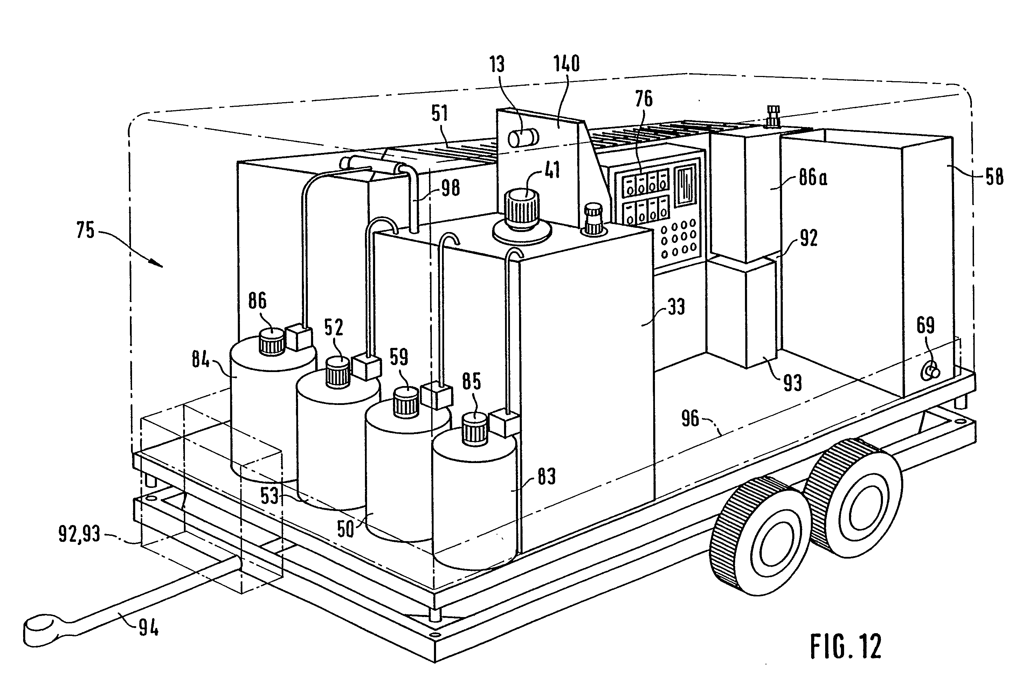

Im Gegensatz zu der Vorrichtung nach dem ersten Ausführungsbeispiel weist im zweiten Ausführungsbeispiel der erste Behälter 140 einen Siphon 82 auf, in den das Schmutzwasser zunächst hineingelangt. Die eine Seitenwand dieses Siphons 82 (vgl. Fig. 12) ist als Überlauf ausgebildet, an sich ein Bogensieb 80 anschließt. Vom Bogensieb 80 gelangt Wasser, aber auch der ausgesiebte Feststoffanteil in einen Feststoff-Fänger 97, aus dem das Schmutzwasser abfließen kann.

Der erste Behälter 140 und der Feststoff-Fänger 97 sind auf dem zweiten Behälter 33 angeordnet. Die angedeuteten Pfeile zeigen an, daß das Wasser aus dem ersten Behälter 140 und aus dem Feststoff-Fänger 97 in den zweiten Behälter 33 gelangen.

Der zweite Behälter 33 ist mit einem nur schematisch angedeuteten Pegelmesser 48 ausgerüstet. Über einen Wasserablaß 37 kann im Bedarfsfall der zweite Behälter 33 geleert werden.

Der zweite Behälter 33 ist, wie in der Vorrichtung nach dem ersten Ausführungsbeispiel, mit einem Rührwerk 40 und einem Rührmotor 41 ausgerüstet.

Über eine Verbindungsleitung 98 mit einer Förderpumpe gelangt das Wasser aus dem zweiten Behälter 33 in eine Förderleitung 99, von der das Wasser in einen Schrägklärer 81 gelangt. Über nicht bezeichnete Wasserablässe kann der sich im Schrägklärer ansammelnde Sumpf bzw. das Wasser zur Reinigungszwecken aus dem Schrägklärer 81 abgelassen werden.

Über eine Förderpumpe 87 gelangt dann das Wasser aus dem Schrägklärer 81 in eine weitere Förderleitung 99, in welcher eine optische Kontrolleinrichtung 88 zur Feststellung von Schwebestoffen installiert ist. Die optische Kontrolleinrichtung 88 kann beispielsweise eine Lichtschranke einschließen.

Die Förderpumpe 87 fördert das Wasser aus dem Schrägklärer in einen Behälter 86a zur pH-Endkontrolle. In den Behälter 86a ragt der pH-Wertfühler 66 hinein, der in an sich bekannter Weise an einen Schreiber 89 und eine akustische Warnanlage 90 angeschlossen ist.

Aus dem Behälter 86a zur pH-Endkontrolle gelangt das Wasser über den Einlaufstutzen 89 in den dritten Behälter 58, in welchem das gereinigte Wasser gesammelt wird. Dieser dritte Behälter 58 ist, wie in der Vorrichtung nach dem ersten Ausführungsbeispiel, mit einem Wasserstandsmelder 70, 71 ausgerüstet. In ihn kann über einen Frischwasserzulauf 95 Frischwasser nachgeführt werden. Der dritte Behälter 58 ist mit einem Wasserablaß 60 ausgerüstet und weist zudem einen Wasserauslauf 69 auf, der an ein Reinigungsgerät 100, vorzugsweise ein Hochdruckreinigungsgerat, angeschlossen sein kann. Mit diesem Hochdruckreinigungsgerät 100 kann im Recycling-Verfahren das gereinigte Wasser, unter Umständen mit zugesetztem Frischwasser, einer weiteren Verwendung zugeführt werden.

Wie in der Vorrichtung nach dem ersten Ausführungsbeispiel, steht der zweite Behälter 33 über Dosierpumpen 49 (Säure) und 52 (Base) mit entsprechenden Vorratsbehältern 50 (Säure) und 53 (Base) in Verbindung.

Zusätzlich weist die Vorrichtung nach dem zweiten Ausführungsbeispiel jedoch noch einen Behälter 83 für Spaltmittel auf, der über eine Dosierpumpe 85 mit dem Behälter 33 in Wirkverbindung steht.

Weiterhin ist ein Behälter 84 für Flockungsmittel vorgesehen, welches über eine Dosierpumpe 86 in die Verbindungsleitung 88 eingespeist werden kann.

Alle Förderpumpen 49, 52, 85, 86, 87 können als pneumatische Pumpen ausgebildet sein. Zur Versorgung dieser pneumatischen Pumpen ist ein Kompressor 91 vorgesehen. Pneumatische Pumpen werden immer dann verwendet, wenn feindosierte Mengen aus den Vorratsbehältern 50, 53, 83 und 84 dem Wasser zugegeben werden müssen.

Ohne am Kern der Erfindung etwas zu ändern, können jedoch auch durch Elektromotore betriebene Förderpumpen zum Einsatz kommen.

Die Vorrichtung kann komplettiert werden durch einen Aktivkohlefilter 92 und einen Ölabscheider 93, die gemäß Fig. 12 an einem beliebigen Ort innerhalb der Transporteinheit, aber auch als separate Einheit 92, 93 außerhalb der Transporteinheit, beispielsweise auf der Deichsel, oder an der Außenwand eines Containers oder auf einem Lastwagenchassis untergebracht werden können. In Fig. 12 ist nur die Anordnung der separaten Einheit 92, 93 auf einer Deichsel 93 dargestellt.

Die gesamte Transporteinheit 75 nach der Erfindung steht in einer Sicherheitsauffangwanne 96, die verhindert, daß beispielsweise Schmutzwasser bei Leckagen ungewollt in den Boden eindringen.

Liste der verwendeten Bezeichnungen

1 Fassade
2 zusammenlegbare Folienwanne
3 Seitenwand
4 Dichtungsstreifen
5 Befestigungsstreifen
6 Splint
7 Befestigungsklammer
8 Stellwinkel
9 Folienspanner
10 Förderpumpe
11 Motor
12 fliegende Leitung
13 Zulaufrohr
14 erster Behälter
15 Seitenwand
16 Innenseite
17 Seitenwand
18 Innenseite
19 Schwebestoff-Fänger
20 oberer Schwebestoff-Fänger
21 mittlerer Schwebestoff-Fänger
22 unterer Schwebestoff-Fänger
23 Rahmen
24 Kunststoffblende
25 Führungsschiene
26 Saugnapf
27 halbe Behälterhöhe
28 Überlaufstutzen
29 Überlaufrohr
30 Wasserablaß
31 Mannlochdeckel
32 Sumpf
33 zweiter Behälter
34 Einlaufstutzen
35 Überlaufstutzen
36 Mannlochdeckel
37 Wasserablaß
38 senkrechte Trennwand
39 Wasserdurchlauf
40 Rührwerk
41 Rührmotor
42 pH-Wert-Fühler
43 Bypaßleitung
44 Umwälzpumpe
45 pH-Wert-Meßgerät
46 Dosierpumpenfestwertregler Säure
47 Dosierpumpenfestwertregler Base
48 Pegelmesser
49 Dosierpumpe Säure
50 Vorratsbehälter Säure
51 Pegelmesser Säure

52 Dosierpumpe Base
53 Vorratsbehälter Base
54 Pegelmesser Base
55 Zulaufleitung Säure
56 Zulaufleitung Base
57 Überlaufrohr
58 dritter Behälter
59 Einlaufstutzen
60 Wasserablaß
61 senkrechte Trennwand
62 Wasserdurchlauf
63 Naßhalteraum
64 Mannlochdeckel
65 Filter
66 pH-Wert-Fühler
67 pH-Wert-Schreiber
68 pH-Wert Grenzwertgeber max. Min.
69 Wasserauslauf
70 Wasserstandsmelder max.
71 Wasserstandsmelder min.
72 Feststoff-Fänger unten
73 Feststoff-Fänger oben
74 Gerüst
75 Transporteinheit
76 elektr. Schalt- bzw. Steuerorgane
77 elektr. Anzeigen
78 einachsiger Anhänger
80 Bogensieb
81 Schrägklärer
82 Siphon
83 Behälter für Spaltmittel
84 Behälter für Flockungsmittel
85 Dosierpumpe für Spaltmittel
86 Dosierpumpe für Flockungsmittel
86a Behälter zur pH-Endkontrolle
87 Förderpumpe
88 optische Kontrolleinrichtung
89 Schreiber
90 akustische Warnanlage
91 Kompressor
92 Aktivkohlefilter
93 Ölabscheider
94 Deichsel
95 Frischwasserzulauf
96 Sicherheitsauffangwanne
97 Feststoff-Fänger
98 Verbindungsleitung
99 Förderleitung
100 Reinigungsgerät

**Ansprüche**

1. Vorrichtung zur Entsorgung des bei Fassadenreinigungen anfallenden Schmutzwassers mit einem ersten Behälter zum mechanischen Abscheiden von Schmutzpartikeln, einem zweiten Behälter zum Neutralisieren des Wassers und einem dritten Behälter zum Sammeln des gereinigten Wassers, der mit einer Wasserentnahme oder einem Wasserauslauf verbunden ist, dadurch gekennzeichnet, daß diese drei Behälter (14,140,33,58) feste Behälter sind, die zusammen mit je einem Vorratsbehälter (50, 53) für eine Säure bzw. Base sowie mit wenigstens einem pH-Meßgerät (45; 66, 67, 68), Dosierpumpen (49, 52) und elektronischen Steuer- und Anzeigemitteln (76, 77) zu einer Transporteinheit (75) kombiniert sind, und daß der erste Behälter (14) über eine fliegende Leitung (12) mit einer an deren Saugende angeschlossenen Förderpumpe (10) mit einer zusammenlegbaren Folienwanne (2) zum Auffangen des von der Fassade (1) ablaufenden Schmutzwassers verbindbar ist, deren obere Kante der zu einer Fassade (1) hinweisenden Seitenwand (3) unter Zwischenfügung eines Dichtstreifens (4) an der Fassade (1) festlegbar ist.

2. Vorrichtung nach Anspruch 1, dadurch gekennzeichnet, daß der Dichtstreifen (4) aus unter Einwirkung von Feuchtigkeit aufquellendem Material besteht.

3. Vorrichtung nach den Ansprüchen 1 und 2, dadurch gekennzeichnet, daß als Behälter (14, 140, 33, 58) Kunststoffbehälter nach Art von Heizöltanks mit je einem Mannlochdeckel (31, 36, 64) verwendet werden.

4. Vorrichtung nach den Ansprüchen 1 bis 3, dadurch gekennzeichnet, daß die Behälter (14, 33, 58) nahe nebeneinander in einem Gerüst (74) angeordnet und durch kurze, lösbare Überlauf-Rohrstücke (29, 57) miteinander verbunden sind.

5. Vorrichtung nach den Ansprüchen 1 bis 4, dadurch gekennzeichnet, daß jeder Behälter (14, 33, 58) mit einem unteren Wasserablaß (30, 37, 60) versehen ist.

6. Vorrichtung nach den Ansprüchen 1 bis 5, dadurch gekennzeichnet, daß im ersten Behälter (14) Schwebestoff-Fänger (19; 20, 21, 22), vorzugsweise quer zur Durchlaufrichtung des Wassers von Seitenwand (15) zu Seitenwand (17) reichende Schwebestoff-Fänger (20, 21, 22) vorgesehen sind.

7. Vorrichtung nach Anspruch 6, dadurch gekennzeichnet, daß die Schwebestoff-Fänger (19; 20, 21, 22) in Rahmen (23) befestigte Kunststoffblenden (24) sind.

8. Vorrichtung nach Anspruch 7, dadurch gekennzeichnet, daß die Rahmen (23) der Kunststoffblenden (24) in senkrechten Führungsschienen (25) an den Innenseiten (16, 18) gegenüberliegender Wände (15, 17) des ersten Behälters (14) sitzen.

9. Vorrichtung nach Anspruch 7, dadurch gekennzeichnet, daß die Rahmen (23) der Kunststoffblenden (24) mittels Saugnäpfen (26) an den Wänden des ersten Behälters (14) befestigt sind.

10. Vorrichtung nach den Ansprüchen 7 bis 9, dadurch gekennzeichnet, daß drei Arten von Schwebestoff-Fängern (20, 21, 22) vorgesehen sind, von denen die oberen Schwebestoff-Fänger (20) von oben bis zur halben Behälterhöhe (27), die unteren Schwebestoff-Fänger (22) von unten bis zur halben Behälterhöhe (27) in den ersten Behälter hineinragen und die mittleren Schwebestoff-Fänger (21) im Wasserstrom zwischen den oberen und den unteren Schwebestoff-Fängern (20, 22) sitzen.

11. Vorrichtung nach den Ansprüchen 1 bis 5, dadurch gekennzeichnet, daß der zweite Behälter (33) mit einem Rührgerät (40, 41) oder einer Umwälzpumpe (44) sowie einem Gerät (45) zur laufenden pH-Wertmessung und zur Steuerung der Säure- bzw. Basen-Dosierpumpen (49, 50) in Wirkverbindung steht.

12. Vorrichtung nach Anspruch 11, dadurch gekennzeichnet, daß bezogen auf den Wasserdurchlauf im letzten Viertel des zweiten Behälters (33) eine senkrechte Trennwand (38) mit einem tiefliegenden Wasserdurchlauf (39) vorgesehen ist, in welchem der pH-Wert-Fühler (42) sitzt.

13. Vorrichtung nach den Ansprüchen 1 bis 5, dadurch gekennzeichnet, daß bezogen auf den Wasserdurchlauf im letzten Viertel des dritten Behälters (58) eine senkrechte Trennwand (61) mit einem tiefliegenden Wasserdurchlauf (62) und einem dahinterliegenden Naßhalteraum (63) zur Aufnahme eines pH-Wert-Fühlers (66) für ein pH-Wert-Schreiber (67) vorgesehen ist.

14. Vorrichtung nach Anspruch 13, dadurch gekennzeichnet, daß der Wasserauslauf (69) oberhalb des Naßhalteraumes (63) angeordnet ist.

15. Vorrichtung nach den Ansprüchen 1 bis 14, dadurch gekennzeichnet, daß die Transporteinheit (75) in einem Container angeordnet ist.

16. Vorrichtung nach den Ansprüchen 1 bis 14, dadurch gekennzeichnet, daß die Transporteinheit (75) auf einem Pritschenwagen montiert ist.

17. Vorrichtung nach den Ansprüchen 1 bis 14, dadurch gekennzeichnet, daß die Transporteinheit (75) auf einem Anhänger (78) montiert ist.

18. Vorrichtung nach Anspruch 1 und einem oder mehreren der Ansprüche 2 bis 17, dadurch gekennzeichnet,
daß der erste Behälter (140) zum mechanischen Abscheiden der Schmutzpartikel hinter dem Anschluß der fliegenden Leitung (12) mit einem Bogensieb (80) ausgerüstet ist, und daß zwischen dem zweiten Behälter 3) zum Neutralisieren des Wassers und dem dritten Behälter (58) zum Sammeln des gereinigten Wassers ein Schrägklärer (81) geschaltet ist.

19. Vorrichtung nach Anspruch 18, dadurch gekennzeichnet, daß der erste Behälter (140) auf dem zweiten Behälter (33) angeordnet ist, daß die fliegende Leitung (12) in einem über die Breite des ersten Behälters (140) sich erstreckenden Siphon (82) mündet, und daß die obere Kante des Bogensiebes (80) an der oberen Kante des Siphons (82) befestigt ist.

20. Vorrichtung nach den Ansprüchen 18 und 19, dadurch gekennzeichnet, daß in der Transporteinheit (75) zusätzlich ein Behälter (83) mit einer Dosierpumpe (85) für ein Spaltmittel und ein weiterer Behälter (84) mit einer Dosierpumpe (86) für ein Flockungsmittel vorgesehen sind, daß die Dosierpumpe (85) für das Spaltmittel an den zweiten Behälter (33) und die Dosierpumpe (86) für das Flockungsmittel an die Verbindungsleitung (98) zwischen dem zweiten Behälter (33) und dem Schrägklärer (81) angeschlossen sind.

21. Vorrichtung nach den Ansprüchen 18 bis 20, dadurch gekennzeichnet, daß zwischen dem Schrägklärer (81) und dem dritten Behälter (58) ein Behälter (86) zur pH-Endkontrolle vorgesehen ist, und daß in der Förderleitung (99) zwischen dem Schragklärer (81) und dem Behälter (86) zur pH-Endkontrolle eine Förderpumpe (87) sowie eine optische Kontrolleinrichtung (88) für Schwebestoffe vorgesehen sind.

22. Vorrichtung nach Anspruch 21, dadurch gekennzeichnet, daß die optische Kontrolleinrichtung (88) für Schwebestoffe eine Fotozelle einschließt.

23. Vorrichtung nach den Ansprüchen 21 und 22, dadurch gekennzeichnet, daß der Behälter (86) zur pH-Endkontrolle mit einem Schreiber (89) und einer akustischen Warnanlage (90) in Wirkverbindung steht.

24. Vorrichtung nach den Ansprüchen 18 bis 23, dadurch gekennzeichnet, daß die Dosierpumpen (49, 52, 85, 86) und die Förderpumpe (87) pneumatisch angetriebene Pumpen sind, und daß in der Transporteinheit (75) ein Kompressor (91) für diese Pumpen vorgesehen ist.

25. Vorrichtung nach den Ansprüchen 18 bis 24, gekennzeichnet durch einen Ölabscheider (93) und einen Aktivkohlefilter (92), der hinter dem Behälter (86) zur pH-Endkontrolle in den Wasserstrom eingeschaltet ist.

26. Vorrichtung nach Anspruch 25, dadurch gekennzeichnet, daß der Aktivkohlefilter (92) und der Ölabscheider (93) zu einer separaten Einheit zusammengefaßt sind.

27. Vorrichtung nach Anspruch 25, dadurch gekennzeichnet, daß der Aktivkohlefilter (92) und der Ölabscheider (93) im System innerhalb der Transporteinheit (75) integriert sind.

28. Vorrichtung nach Anspruch 26, dadurch gekennzeichnet, daß die separate Einheit aus dem Aktivkohlefilter (92) und dem Ölabscheider (93) außerhalb der Transporteinheit (75), vorzugsweise auf der Deichsel (94) des Anhängers (78) am Container oder auf einem LKW-Aufbau angeordnet sind.

29. Vorrichtung nach den Ansprüchen 18 bis 28, dadurch gekennzeichnet, daß der dritte Behälter (58) als Recyclingbecken mit einem Frischwasserzulauf (95) ausgebildet ist.

30. Vorrichtung nach den Ansprüchen 18 bis 29, dadurch gekennzeichnet, daß die Transporteinheit (75) in einer Sicherheitsauffangwanne (96) steht.

FIG.1

Neu eingereicht / Newly filed
Nouvellement déposé

FIG. 2

FIG. 3

FIG. 4

FIG. 5a

FIG. 5 b

FIG. 6

FIG. 7

FIG.8

FIG.9

FIG.10

EP 0 331 136 A1

EP 0 331 136 A1

Nouvellement déposé

**FIG.11**

FIG. 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 525 766 (GELSENBERG MANNESMANN UMWELTSCHUTZ) <br> * Seite 8, Ansprüche 1-5; Seite 4, letzter Absatz - Seite 5, Absatz 2; Seite 6, Absatz 2 - Seite 7, Absatz 1 * <br> --- | 1,4,11, 12,15- 17,20,- 25,27, 29 | C 02 F 9/00 <br> E 04 G 23/00 <br> B 01 D 21/00 <br> C 02 F 1/66 |
| A | DE-A-3 440 461 (A. KÄRCHER) <br> * Spalte 2, Zeile 29 - Spalte 3, Zeile 4; Spalte 4, Zeile 24 - Spalte 5, Zeile 25 * <br> --- | 1,2 | |
| P,A | DE-U-8 704 503 (R. STEFFENS) <br> * Seiten 8-11 * <br> --- | 1,2 | |
| A | LU-A- 85 508 (PAUL WURTH) <br> * Seite 3, Zeilen 15-18; Figur * <br> --- | 6-10 | |
| A | GWF-WASSER/ABWASSER, Jahrgang 126, 1985, Heft 8, Seiten 451-452; "Praktizierter Umweltschutz Abwasserneutralisierung mit CfG-Dosieranlage" <br> * Insgesamt * <br> --- | 1,11-13 ,21,23 | |
| A | DE-A-3 219 963 (H. KREYENBERG) <br> * Seite 1, Ansprüche 1,3,4 * <br> --- | 18 | RECHERCHIERTE SACHGEBIETE (Int. Cl.4) <br><br> C 02 F <br> E 04 G |
| A | US-A-4 687 574 (THE MUNTERS CORP.) <br> * Titelseite, Zusammenfassung; Spalte 3, Zeilen 39-43 * <br> --- | 18 | |
| A | TECHNISCHE NACHRICHTEN, Band 42, Nr. 9. 1976, Seite 472; "Betriebs-Abfall und Abwasseraufbereitungsanlage für Beton- und Fertigteilwerke" <br> * Insgesamt * <br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 24-05-1989 | TEPLY J. |